**Europäisches Patentamt**

**European Patent Office**

**Office européen des brevets**

(11) Veröffentlichungsnummer: **0 107 143**
**B1**

(12) **EUROPÄISCHE PATENTSCHRIFT**

(45) Veröffentlichungstag der Patentschrift:
**06.08.86**

(21) Anmeldenummer: **83110153.0**

(22) Anmeldetag: **12.10.83**

(51) Int. Cl.⁴: **A 61 C 17/02**

(54) Ventil, insbesondere Mischventil.

(30) Priorität: **23.10.82 DE 3239301**

(43) Veröffentlichungstag der Anmeldung:
**02.05.84 Patentblatt 84/18**

(45) Bekanntmachung des Hinweises auf die Patenterteilung:
**06.08.86 Patentblatt 86/32**

(84) Benannte Vertragsstaaten:
**AT BE CH DE FR GB IT LI LU NL SE**

(56) Entgegenhaltungen:
**EP - A - 0 025 456**
**EP - A - 0 035 040**
**DE - A - 2 137 584**
**DE - A - 2 701 651**
**DE - A - 2 947 720**
**DE - A - 3 025 023**

(73) Patentinhaber: **Hans Grohe GmbH & Co. KG,**
**Auestrasse 9, D-7622 Schiltach (DE)**

(72) Erfinder: **Lorch, Werner, Am Hammergraben 84/1,**
**D-7230 Schramberg (DE)**

(74) Vertreter: **Patentanwälte Ruff und Beier,**
**Neckarstrasse 50, D-7000 Stuttgart 1 (DE)**

## Beschreibung

Die Erfindung betrifft ein Ventil, insbesondere ein Mischventil, mit einem Ventilgehäuse, einem Wasserauslauf und mindestens einem Wassereinlauf.

Es ist bekannt, mit Hilfe eines Adapters am Auslaufende eines Mischventils eine Munddusche anzuschliessen. Bei angeschlossener Munddusche kann der Wasserhahn nicht mehr normal benutzt werden.

Es ist ebenfalls bekannt (DE-A-3025023), eine Mundbrause an den Duschschlauch einer Bade- oder Brausewannenbatterie anzukuppeln. Dabei muss zunächst die normale Brause abgekuppelt und anschliessend die Munddusche angekuppelt werden. Auch in diesem Fall ist bei angeschlossener Munddusche der Duschschlauch nicht mehr normal verwendbar.

Weiterhin ist es bekannt (DE-A-2947720), ein Dreiwegeventil an das Auslaufende eines Wasserhahns anzuschrauben. Dieses Dreiwegeventil besitzt zwei Wasseraustrittsöffnungen, wobei an die eine Wasseraustrittsöffnung ein Zuleitungsschlauch für eine Munddusche und an die andere Wasseraustrittsöffnung ein sogenannter Perlator angeschlossen werden kann. Ein derartiges zusätzliches Dreiwegeventil wirkt natürlich störend und beeinträchtigt das optische Aussehen eines Mischventils in starkem Masse.

Ebenfalls bekannt sind Mundduschen, die einen eigenen Wasserbehälter besitzen, der vor dem Betrieb aufgefüllt wird, und die mit Hilfe einer Pumpe die Flüssigkeit befördern.

Der Erfindung liegt die Aufgabe zugrunde, die Möglichkeit eines möglichst einfachen Anschlusses und Betriebes einer Munddusche, einer Zahnbürste o. dgl. Hilfsgerät zu schaffen, ohne dass die Ventilarmatur in ihrem Aussehen und in ihrer Funktion beeinträchtigt wird. Darüber hinaus soll die Armatur möglichst wenig in ihrer Konstruktion geändert werden müssen.

Zur Lösung dieser Aufgabe ist erfindungsgemäss vorgesehen, dass ein Ventil der eingangs genannten Art einen in das Innere des Ventilgehäuses führenden mit einer Schnellkupplungseinrichtung versehenen Anschluss für ein Zusatzgerät aufweist. Dadurch wird es möglich, das Zusatzgerät, beispielsweise eine Munddusche, einfach an dem Ventil anzuschliessen, ohne dass das Ventil, insbesondere eine Mischbatterie, in seinem normalen Gebrauch behindert wird. Besonders günstig ist es dabei, wenn die Schnellkuppeleinrichtung eine Steckkupplung ist.

Für das Betreiben der Munddusche ist kein zusätzliches Bedienorgan erforderlich, da der Wasserdurchlauf durch die Munddusche mit Hilfe der üblichen Bedienorgane des Ventils gesteuert werden kann. Natürlich ist auch die Verwendung einer Munddusche mit einem einfachen Absperrventil, beispielsweise in dem die Munddusche mit dem Ventil verbindenden Schlauch, möglich. In diesem Fall kann die Munddusche ständig an dem Mischventil angeschlossen sein.

Besonders günstig ist es jedoch, wenn nach einem weiteren Merkmal der Erfindung der Anschluss ein Rückschlagventil aufweist. In diesem Fall lässt sich nach Gebrauch die Munddusche leicht abkuppeln.

In Weiterbildung kann vorgesehen sein, dass bei einem Mischventil der Anschluss in einen Mischwasser führenden Bereich des Ventils führt. Damit lässt sich die Temperatur des von der Munddusche abgegebenen Wassers mit Hilfe der normalen Mischventilbetätigung einstellen und auswählen.

Um die Anschlussmöglichkeit für die Munddusche auch bei schon vorhandenen Ventilen oder Mischbatterien zu ermöglichen, schlägt die Erfindung weiterhin vor, dass der Anschluss für das Zusatzgerät mindestens teilweise durch das Bedienelement führt.

In diesem Fall braucht nur das Bedienelement gegen ein anderes Bedienelement ausgetauscht zu werden. Es ist also die Möglichkeit der einfachen Nachrüstung gegeben. Beispielsweise sind einhandbediente Mischventile bekannt, bei denen ein Steuerkörper über ein Bedienelement mit einem Griff verbunden ist. Dieses Bedienelement, das die Form einer Stange oder eines Hebels annehmen kann, wird nach den Massnahmen der Erfindung längs durchbohrt, wobei der ventilinnenseitige Ausgang der Bohrung im Mischbereich des Ventils mündet. Der Anschluss für das Zusatzgerät ist dann am Hebelgriff angeordnet.

Es ist jedoch auch möglich, dass aus dem Mischbereich eine ggf. flexible Leitung zu einem Anschluss für das Zusatzgerät führt.

Damit das optische Aussehen und auch die Funktion der Mischbatterie möglichst wenig beeinträchtigt sind, schlägt die Erfindung weiterhin vor, dass der Anschluss an der Rückseite des Ventils und/oder des Griffes ausmündet. In diesem Fall wird der optische Eindruck überhaupt nicht beeinträchtigt. Darüber hinaus kann mit Vorteil vorgesehen sein, dass der Anschluss versenkt ausgebildet ist, so dass kein Teil über die äussere Kontur der Mischbatterie vorspringt. Dies hat besondere Vorteile im Hinblick auf eine erleichterte Reinigung des Mischventils.

Besonders günstig ist die Anwendung der Erfindung bei einem einhebelbetätigten Mischventil mit einem Kugelküken. In diesem Fall führt der Anschluss in das Innere des Kugelkükens. Dies ist eine besonders günstige und einfache Verwirklichung des Anschlusses, wobei insbesondere eine hohle Verbindungsstange zwischen dem Hebelgriff und dem Kugelküken dazu verwendet werden kann, als Leitung zu dienen. In diesem Fall wird zwischen die Verbindungsstange und dem Hebelgriff mit Vorteil eine thermisch isolierende Dichtung eingesetzt.

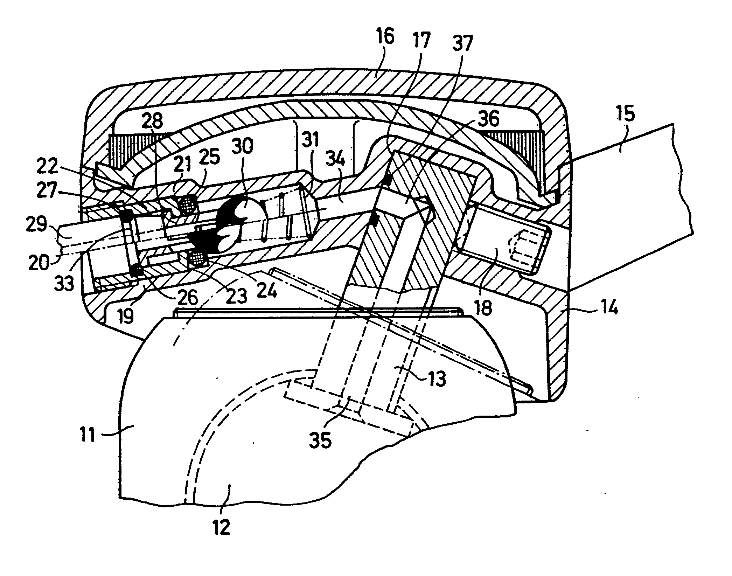

Weitere Merkmale, Einzelheiten und Vorzüge der Erfindung ergeben sich aus der folgenden Beschreibung einer bevorzugten Ausführungsform der Erfindung sowie anhand der Zeichnung. Hierbei zeigt die einzige Zeichnungsfigur einen Schnitt durch die Verbindung eines Kugelkükens mit einem Griffhebel.

Von dem eigentlichen Ventilgehäuse ist in der Zeichnungsfigur nur eine Überwurfmutter 11 zu sehen, die den unteren Teil des Ventiles nach oben abschliesst und in deren Innerem ein Kugelküken 12 angeordnet ist. Das Kugelküken 12 arbeitet mit nicht dargestellten Wassereintritts- und Austrittsöffnungen zusammen. Die Verschwenkbarkeit des Griffes 14 gegenüber dem Ventil ist durch die in gestrichelten Linien dargestellte Stellung der Überwurfmutter 11 angedeutet, wobei natürlich der Griff gegenüber der feststehenden Überwurfmutter verschwenkt wird.

Das Kugelküken 12 ist über eine Verbindungsstange 13 mit einem Griffelement 14 verbunden, an dessen in der Figur rechten Seite ein Bedienungshebel 15 einstückig angeformt ist. Das Griffelement 14 ist nach oben hin durch einen Deckel 16 abgeschlossen. Die Verbindungsstange 13 greift mit ihrem unteren Ende in das Innere des Kugelkükens 12 ein, während ihr oberes Ende in eine entsprechende Sacklochbohrung 17 im Griffelement 14 eingreift. In der Sacklochbohrung 17 ist die Verbindungsstange 13 mit Hilfe einer Schraube 18 festgelegt.

Innerhalb des Griffelementes 14 ist eine Steckkupplung 19 für den Anschluss einer in der Figur nicht dargestellten Munddusche angeordnet. In der Figur ist die Steckkupplung oberhalb ihrer Mittellinie 20 in geöffnetem und unterhalb der Mittellinie 20 in geschlossenem Zustand dargestellt. Die Steckkupplung 19 enthält einen äusseren Teil 21, in den von der in der Figur linken Seite her eine Buchse 22 eingeschraubt ist, wobei zwischen der inneren Stirnfläche 23 der Buchse 22 und einer Schulter 24 des äusseren Teiles 21 ein Dichtring 25 eingesetzt ist. Die Buchse 22 besitzt an ihrer Innenseite eine umlaufende Nut 26, in die ein zweiter Dichtring 27 eingesetzt ist. In der Buchse 22 ist ein Führungselement 28 eingesetzt, das mit seiner Vorderseite von einem in die Steckkupplung 19 einsetzbaren Anschlussteil 29 nach rechts bewegbar ist. Mit seinem in der Figur rechten Ende greift das Führungselement 28 an einer Kugel 30 an, die unter Vorspannung einer Feder 31 steht. Entfernt man das Anschlussteil 29 aus der Steckkupplung 19, so gelangt die Kugel 30 zur Anlage an dem Dichtring 25, was ein Abschliessen der Steckkupplung 19 bedeutet.

Das Anschlusselement 29, das über einen nicht dargestellten Schlauch mit der Munddusche verbunden ist, besitzt in seinem vorderen Ende eine umlaufende Einkerbung 33, die zusammen mit dem Dichtring 27 ein Einrasten bewirkt. Das Innere der Steckkupplung 19 ist über eine durchgehende Bohrung 34 mit der Sacklochbohrung 17 verbunden. Die Verbindungsstange 13 besitzt eine in Längsrichtung verlaufende Sackbohrung 35, die in eine zweite radial verlaufende Bohrung 36 übergeht. Die radiale Bohrung 36 ist derart angeordnet, dass sie bei eingesetzter Verbindungsstange 13 mit der Ausmündung der durchgehenden Bohrung 34 übereinstimmt. Um die Ausmündung der Bohrung 36 ist ein Dichtring 37 angeordnet.

Es wäre ebenfalls möglich, den gesamten Zwischenraum zwischen der Verbindungsstange 13 und der Sacklochbohrung 17 durch eine Dichtung thermisch zu isolieren.

Im Betrieb des in der Figur dargestellten Mischventiles gelangt Flüssigkeit aus dem Inneren des Kugelkükens 12 durch die Bohrungen 35, 36, 34 in das Innere der Steckkupplung 19, von wo aus sie bei nach rechts verschobener Kugel 30 durch das Innere des Anschlusselementes 29 zur Munddusche gelangen kann. Bei herausgezogenem Anschlussteil 29 ist der durch die Steckkupplung 19 gebildete Anschluss flüssigkeitsdicht abgeschlossen.

Es ist zu bemerken, dass die in der Figur dargestellte bevorzugte Ausführungsform der Erfindung bei einem bekannten Mischventil ohne Änderung des eigentlichen Ventils angewandt werden kann, wobei nur das Griffelement 14 durch die Einfügung der Steckkupplung 19 und die Verbindungsstange 13 durch die Bohrungen 35, 36 abgeändert zu werden braucht. Das sonstige Mischventil bleibt unverändert. Weiterhin ist zu sehen, dass der Anschluss bzw. die Steckkupplung 19 auf der dem eigentlichen Bedienhebel 15 entgegengesetzten Seite des Griffelementes 14 angeordnet ist. Da der Bedienhebel 15 normalerweise auf der Vorderseite ist, liegt also der Anschluss für die Munddusche auf der Rückseite des Griffelementes 14. Dadurch kann man den Anschluss von vorne überhaupt nicht sehen, so dass der optische Eindruck der Mischarmatur nicht beeinträchtigt wird. Darüber hinaus ist zu sehen, dass dann, wenn das Steckelement 29 aus der Steckkupplung 19 entfernt ist, diese über die äussere Kontur des Griffelementes 14 nicht übersteht. Auch dies führt dazu, dass der optische Eindruck nicht beeinträchtigt wird. Darüber hinaus ist auch die Reinigung und Pflege der Mischarmatur in keiner Weise beeinträchtigt.

## Patentansprüche

1. Ventil, insbesondere Mischventil, mit einem Ventilgehäuse, einem Wasserauslauf und mindestens einem Wassereinlauf, dadurch gekennzeichnet, dass es einen in das Innere des Ventilgehäuses (11) führenden, mit einer Schnellkupplungseinrichtung (19) versehenen Anschluss für ein Zusatzgerät aufweist.

2. Ventil nach Anspruch 1, dadurch gekennzeichnet, dass die Schnellkupplungseinrichtung eine Steckkupplung (19) ist.

3. Ventil nach Anspruch 1 oder 2, dadurch gekennzeichnet, dass der Anschluss ein Rückschlagventil aufweist.

4. Ventil nach einem der vorhergehenden Ansprüche, dadurch gekennzeichnet, dass bei einem Mischventil der Anschluss in einen Mischwasser führenden Bereich des Ventils führt.

5. Ventil nach einem der vorhergehenden Ansprüche, dadurch gekennzeichnet, dass der Anschluss mindestens teilweise durch das Bedienelement führt.

6. Ventil nach einem der vorhergehenden Ansprüche, mit einem mit einem Hebel (15) verbundenen Kugelküken (12), dadurch gekennzeichnet, dass der Anschluss in das Innere des Kugelkükens (12) führt.

7. Ventil nach Anspruch 6, dadurch gekennzeichnet, dass der Anschluss am Hebelgriff (14) ausmündet und durch eine hohle Verbindungsstange (13) zu dem Kugelküken (12) führt.

8. Ventil nach Anspruch 7, dadurch gekennzeichnet, dass zwischen die Verbindungsstange (13) und den Hebelgriff (14) eine thermisch isolierende Dichtung eingesetzt ist.

9. Ventil nach einem der vorhergehenden Ansprüche, dadurch gekennzeichnet, dass der Anschluss an der Rückseite des Ventils und/oder des Griffs (14) ausmündet.

10. Ventil nach einem der Ansprüche 1 bis 8, dadurch gekennzeichnet, dass der Anschluss an einer die Bedienbarkeit des Anschlusses erleichternden und/oder das Aussehen des Ventils nicht störenden Stelle des Ventils und/oder des Griffs ausmündet.

## Claims

1. Valve, particularly a mixing valve, with a valve casing, a water outlet and at least one water inlet, characterized in that it has a connection for a supplementary apparatus leading into the interior of the valve casing (11) and provided with a quick-action coupling device (19).

2. Valve according to claim 1, characterized in that the quick-action coupling device is a plug-in coupling (19).

3. Valve according to claims 1 or 2, characterized in that the connection has a check valve.

4. Valve according to one of the preceding claims, characterized in that in the case of a mixing valve, the connection leads into an area of the valve which carries mixing water.

5. Valve according to one of the preceding claims, characterized in that the connection at least partly leads through the control element.

6. Valve according to one of the preceding claims, with a spherical plug (12) connected to a lever (15), characterized in that the connection leads into the interior of the spherical plug (12).

7. Valve according to claim 6, characterized in that the connection issues on to the lever handle (14) and leads through a hollow connecting rod (13) to the spherical plug (12).

8. Valve according to claim 7, characterized in that a thermally insulated seal is placed between the connecting rod (13) and the lever handle (14).

9. Valve according to one of the preceding claims, characterized in that the connection issues on to the back of the valve and/or the handle (14).

10. Valve according to one of the claims 1 to 8, characterized in that the connection issues at a point of the valve and/or the handle, which facilitates the operability of the connection and/or does not prejudice the appearance of the valve.

## Revendications

1. Soupape, en particulier soupape de mélange, comportant un corps de soupape, une sortie d'eau et au moins une entrée d'eau, caractérisée en ce qu'elle comporte un raccord de branchement d'un appareil supplémentaire pourvu d'un dispositif de raccordement rapide (19), aboutissant à l'intérieur du corps de soupape (11).

2. Soupape selon la revendication 1, caractérisée en ce que le dispositif de raccordement rapide est un dispositif d'accouplement à emboîtement (19).

3. Soupape selon la revendication 1 ou 2, caractérisée en ce que le raccord de branchement comporte une soupape de retenue.

4. Soupape selon l'une des revendications précédentes, caractérisée en ce que, dans le cas d'une soupape de mélange, le raccord de branchement aboutit dans une zone de la soupape par laquelle passe de l'eau mélangée.

5. Soupape selon l'une des revendications précédentes, caractérisée en ce que le raccord de branchement passe, au moins en partie, à travers l'élément d'actionnement.

6. Soupape selon l'une des revendications précédentes, comportant une noix sphérique (12) reliée à une manette (15), caractérisée en ce que le raccord de branchement aboutit à l'intérieur de la noix sphérique (12).

7. Soupape selon la revendication 6, caractérisée en ce que le raccord de branchement débouche sur l'élément de manœuvre (14) et rejoint la noix sphérique (12) à travers une tige de liaison creuse (13).

8. Soupape selon la revendication 7, caractérisée en ce qu'un joint thermiquement isolant est inséré entre la tige de liaison (13) et l'élément de manœuvre (14).

9. Soupape selon l'une des revendications précédentes, caractérisée en ce que le raccord de branchement débouche sur la face postérieure de la soupape et/ou de l'élément de manœuvre (14).

10. Soupape selon l'une des revendications 1 à 8, caractérisée en ce que le raccord de branchement débouche en un emplacement de la soupape et/ou de la poignée facilitant la manipulation du raccord de branchement et/ou ne détériorant pas l'aspect de la soupape.